# EUROPÄISCHE PATENTSCHRIFT

(11) **EP 3 278 031 B1**
(45) Veröffentlichungstag und Bekanntmachung des Hinweises auf die Patenterteilung: **20.02.2019**
(21) Anmeldenummer: 16707113.3
(22) Anmeldetag: 01.03.2016
(51) Int. Cl.: F24C 14/00, F24C 15/32, B08B 9/34, A21B 3/04, B05B 7/32

(54) **DURCHFÜHREN EINES REINIGUNGSABLAUFS EINES GARGERÄTS**
CARRYING OUT A CLEANING PROCEDURE FOR A COOKING DEVICE
MISE EN OEUVRE D'UN CYCLE DE NETTOYAGE D'UN APPAREIL DE CUISSON

(30) Priorität: 30.03.2015 EP 15290088
(43) Veröffentlichungstag der Anmeldung: 07.02.2018
(73) Patentinhaber: BSH Hausgeräte GmbH, 81739 München (DE)
(72) Erfinder: CLAUSS, Stéphane, 67140 Stotzheim (FR); FLESCH, Sebastien, 67150 Gerstheim (FR); CHABUT, Nicolas, 67140 Gertwiller (FR); ADAM, Julien, 67100 Strasbourg (FR)
(86) Internationale Anmeldenummer: PCT/EP2016/054275
(87) Internationale Veröffentlichungsnummer: WO 2016/155963

(56) Entgegenhaltungen:
- EP-A1- 2 273 200
- DE-A1- 19 961 835
- DE-A1-102008 063 100
- DE-A1-102010 039 513

## Beschreibung

Die Erfindung betrifft ein Verfahren zum Durchführen eines Reinigungsablaufs eines Gargeräts. Die Erfindung betrifft ferner ein Gargerät, das zum Durchführen eines Reinigungsablaufs eingerichtet ist, wobei das Gargerät einen Garraum und einen nutzerseitig befüllbaren ersten Tank aufweist. Die Erfindung ist insbesondere vorteilhaft anwendbar auf Gargeräte ohne externen Wasseranschluss, insbesondere Dampfgargeräte. Die Erfindung ist insbesondere vorteilhaft anwendbar auf Haushaltsgargeräte.

DE 10 2010 039 513 A1 offenbart eine Dampfgargerätvorrichtung mit einem Dampferzeuger, der eine Verdampfungseinheit, einen Restwassertank und einen Frischwassertank aufweist. Es wird vorgeschlagen, dass der Dampferzeuger zumindest eine Leitung umfasst, die in zumindest einem Betriebszustand ein Fluid von dem Restwassertank zu der Verdampfungseinheit führt.

EP 1 724 529 B1 offenbart einen Ofen, der Folgendes umfasst: ein Gehäuse, das einen Garhohlraum definiert; einen Dampferzeuger mit einem Einlass zum Aufnehmen von Wasser, einem Abfluss und einem Dampfauslass, der wirksam mit dem Garhohlraum verbunden ist, um Dampf in den Garhohlraum einzubringen; und ein tragbares Gefäß, das abnehmbar an dem Ofen angebracht ist und einen Auslass und einen Einlass aufweist, die fluidisch an den Einlass bzw. den Abfluss des Dampferzeugers gekoppelt sind, wenn das tragbare Gefäß an dem Ofen angebracht ist, wodurch das tragbare Gefäß Wasser zu dem Dampferzeuger zuführt und Abflusswasser von dem Dampferzeuger aufnimmt, wobei er einen Wasservorratsbehälter umfasst, der fluidisch an den Dampferzeugereinlass und an den Gefäßauslass gekoppelt ist, wenn das tragbare Gefäß an dem Ofen angebracht ist. Weiterer Stand der Technik ist aus den Dokumenten DE 10 2008 063100A1, DE 199 61 835 A1 und EP 2 273 200 A1 bekannt, wobei das erstgenannte Dokument den nächstliegenden Stand der Technik darstellt.

Es ist die **Aufgabe** der vorliegenden Erfindung, die Nachteile des Standes der Technik zumindest teilweise zu überwinden und insbesondere eine Möglichkeit zur Reinigung eines nicht an einen externen Wasseranschluss angeschlossenen Gargeräts bereitzustellen, die besonders wenig Wasser benötigt und zumindest weitgehend automatisch durch das Gargerät durchführbar ist.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch ein Verfahren zum Durchführen eines Reinigungsablaufs eines Gargeräts mit mindestens folgenden Schritten: (a) Nutzerseitiges Auffüllen eines Tanks (im Folgenden ohne Beschränkung der Allgemeinheit als "erster" Tank bezeichnet) des Gargeräts mit Wasser, (b) Verbringen - z.B. Ablassen oder Abpumpen - eines ersten Anteils des in dem ersten Tank befindlichen Wassers in einen Zwischenspeicher des Gargeräts, (c) Verbringen des in dem Zwischenspeicher befindlichen Wassers in einen Garraum des Gargeräts zum Bereitstellen eines ersten Behandlungsmittels in dem Garraum, (d) Belassen des ersten Behandlungsmittels in dem Garraum für eine erste Zeitdauer, (e) Verbringen eines zweiten Anteils des in dem ersten Tank befindlichen Wassers in den Zwischenspeicher, (f) Verbringen des ersten Behandlungsmittels in den ersten Tank, (g) Verbringen des in dem Zwischenspeicher befindlichen Wassers in einen Garraum des Gargeräts zum Bereitstellen eines zweiten Behandlungsmittels in dem Garraum, (h) Belassen des zweiten Behandlungsmittels in dem Garraum für eine zweite Zeitdauer und (i) Verbringen des zweiten Behandlungsmittels in den ersten Tank.

Dieses Verfahren ergibt den Vorteil, dass der Garraum bzw. dessen Wände mit vergleichsweise wenig Wasser und einem nur geringen konstruktiven Aufwand behandelbar sind, z.B. reinigbar sind. Zudem ist ein solches Verfahren besonders benutzerfreundlich, da das Verfahren bis auf Schritt (a) automatisch durch das Gargerät durchgeführt wird. Ein Nutzer braucht insbesondere zwischen diesen Schritten die Tanks weder zu entleeren noch nachzufüllen. Auch kann durch Schritt (i) eine Mischung der beiden Behandlungsmittel in dem ersten Tank erreicht werden, die besonders gefahrlos handhabbar ist. So können die beiden Behandlungsmittel sich in dem ersten Tank gegenseitig neutralisieren, oder das zweite Behandlungsmittel kann das erste Behandlungsmittel verdünnen usw. Ferner kann dieses Verfahren auf Gargeräte ohne eigenen Wasseranschluss angewandt werden.

Es ist eine für eine nutzerfreundliche Handhabung besonders vorteilhafte Weiterbildung, dass der erste Tank aus dem Gargerät entnehmbar ist. Alternativ oder zusätzlich kann er durch eine Befüllungsleitung mit Flüssigkeit befüllt werden.

Das Verbringen von Wasser aus dem ersten Tank kann beispielsweise durch Pumpen des Wassers aus dem ersten Tank in den Zwischenspeicher umgesetzt werden.

Unter dem Verbringen eines Anteil des in dem ersten Tank befindlichen Wassers wird verstanden, dass nicht das ganze aus dem ersten Tank entfernbare Wasser in den Zwischenspeicher verbracht wird, sondern nur ein vorgegebener Teil davon.

Der Zwischenspeicher kann fest in dem Gargerät verbaut sein.

Es ist eine weitere für eine einfache Bauform vorteilhafte Weiterbildung, dass ein (Nenn-) Füllvolumen des Zwischenspeichers so groß ist wie eine Hälfte eines (Nenn-) Füllvolumens des ersten Tanks. Der Zwischenspeicher kann jedoch auch größer sein, was unter anderem ein Verbringen von mehr als einer Hälfte des in dem ersten Tank befindlichen Wassers in den Zwischenspeicher ermöglicht, wodurch unterschiedliche Volumina der beiden Behandlungsmittel ermöglicht werden. Der Zwischenspeicher kann aber grundsätzlich auch kleiner sein, z.B. wenn die Schritte (b) und (c) gleichzeitig ausgeführt werden. Das Füllvolumen des Zwischenspeichers ist insbesondere abhängig von der für das zweite Behandlungsmittel nötigen Wassermenge.

Das Bereitstellen eines Behandlungsmittels in dem Garraum kann umfassen, dass das Behandlungsmittel - z.B. fertig gemischt - in den Garraum eingeführt wird. Das Behandlungsmittel kann z.B. in einem Zwischenspeicher angesetzt werden. Das Bereitstellen eines Behandlungsmittels in dem Garraum kann auch umfassen, dass das Behandlungsmittel erst in dem Garraum erzeugt wird, beispielsweise durch Zugabe eines Behandlungszusatzes zu Wasser, das sich in dem Garraum befindet (oder umgekehrt).

Das Behandlungsmittel kann eine Flüssigkeit und/oder Dampf sein. So kann das Behandlungsmittel in dem Garraum als Flüssigkeit und/oder dampfförmig vorliegen. Das Behandlungsmittel kann dann auch als ein "Behandlungsfluid" bezeichnet werden.

Das Verbringen des Behandlungsmittels in den ersten Tank kann z.B. in seinem flüssigen Zustand durch einfaches Ablassen oder durch Abpumpen geschehen.

Die Schritte (b) und (c) können auch gleichzeitig durchgeführt werden, wenn beispielsweise aus dem ersten Tank in den Zwischenspeicher verbrachtes Wasser unmittelbar weiter in den Garraum läuft.

Es ist eine Ausgestaltung, dass sich das erste Behandlungsmittel und das zweite Behandlungsmittel gegenseitig neutralisieren. Dadurch kann die nach Schritt (i) in dem ersten Tank befindliche Flüssigkeit besonders gefahrlos gehandhabt werden, z.B. von einem Nutzer entleert werden.

Es ist eine Weiterbildung, dass ein Behandlungsmittel ein alkalisches Fluid ist und das andere Behandlungsmittel ein saures Fluid ist. Diese Weiterbildung weist den Vorteil auf, dass sich die beiden Behandlungsmittel nach Schritt (i) in dem ersten Tank zumindest annähernd neutralisieren können. Zudem ist ein alkalisches Behandlungsmittel besonders gut zur Fettlösung einsetzbar und ein saures Behandlungsmittel besonders gut zur Kalklösung. Das alkalische Fluid kann z.B. einen pH-Wert von 11 oder mehr aufweisen. Das saure Fluid kann z.B. einen pH-Wert von 2 oder weniger aufweisen.

Es ist noch eine Ausgestaltung, dass das zweite Behandlungsmittel klares Wasser ist. Durch das Wasser können Reste des ersten Behandlungsmittels in dem Garraum abgewaschen werden. Auch ermöglicht das Verbringen des Wassers in den ersten Tank eine Verdünnung des dort befindlichen ersten Behandlungsmittels auf ein ungefährliches Niveau.

Es ist auch noch eine Ausgestaltung, dass das erste Behandlungsmittel klares Wasser ist, weil der Garraum so einem Vorspülablauf unterzogen werden kann, z.B. zum Entfernen größerer Reste und/oder zum Aufweichen. Auch hier ermöglicht das Verbringen des Wassers in den ersten Tank eine Verdünnung später eingeleiteten zweiten Behandlungsmittels auf ein ungefährliches Niveau.

Es ist eine weitere Ausgestaltung, dass es zusätzlich mindestens folgende Schritte aufweist: (j) Nutzerseitiges Auffüllen eines zweiten Tanks des Gargeräts mit Wasser, (k) Verbringen eines ersten Anteils des in dem zweiten Tank befindlichen Wassers in den Zwischenspeicher, (I) Verbringen des in dem Zwischenspeicher befindlichen Wassers in den Garraum zum Bereitstellen eines dritten Behandlungsmittels in dem Garraum, (m) Belassen des dritten Behandlungsmittels in dem Garraum für eine dritte Zeitdauer, (n) Verbringen eines zweiten Anteils des in dem zweiten Tank befindlichen Wassers in den Zwischenspeicher, (o) Verbringen des dritten Behandlungsmittels in den zweiten Tank, (p) Verbringen des in dem Zwischenspeicher befindlichen Wassers in den Garraum zum Bereitstellen eines vierten Behandlungsmittels in dem Garraum, (q) Belassen des vierten Behandlungsmittels in dem Garraum für eine vierte Zeitdauer und (r) Verbringen des vierten Behandlungsmittels in den zweiten Tank. Dies ergibt den Vorteil, dass der Garraum auf eine besonders vielgestaltige Art und/oder besonders gründlich reinigbar ist.

Die Schritte (j) bis (r) können analog zu den Schritten (a) bis (i) ausgestaltet werden. Auch kann der zweite Tank analog zu dem ersten Tank ausgestaltet und/oder nutzbar sein (beispielsweise entnehmbar sein usw.). Der zweite Tank kann ein Füllvolumen aufweisen, dass kleiner oder größer ist als das Füllvolumen des ersten Tanks, oder die Füllvolumina der beiden Tanks können gleich groß sein. Das Füllvolumen des Zwischenspeichers kann dann insbesondere gleich oder größer sein als eine Hälfte eines (Nenn-)Füllvolumens des größeren der beiden Tanks.

Allgemein brauchen die Schritte (a) bis (r) nicht in der angegebenen Reihenfolge durchgeführt zu werden. So können die Schritte (b) und (c) oder die Schritte (k) und (I) auch gleichzeitig durchgeführt werden.

Zudem können die Schritte (a) und (j) auch vor den anderen Schritten durchgeführt werden, und zwar in zueinander beliebiger Reihenfolge oder auch gleichzeitig.

Es ist eine Weiterbildung, dass das dritte Behandlungsmittel dem ersten Behandlungsmittel entspricht und das vierte Behandlungsmittel dem zweiten Behandlungsmittel entspricht. So kann der Garraum zweifach auf gleiche Weise behandelt werden.

Es ist eine zur besonders gründlichen Reinigung vorteilhafte Weiterbildung, dass sich die Behandlungsmittel der Schritte (a) bis (i) einerseits und der Schritte (j) bis (r) andererseits voneinander unterscheiden.

So ist es eine Ausgestaltung, dass das vierte Behandlungsmittel klares Wasser ist. Zudem ist es eine Ausgestaltung, das auch das dritte Behandlungsmittel klares Wasser ist.

Diese Ausgestaltungen weisen den Vorteil auf, dass die Schritte (j) bis (r) dazu dienen können, einen besonders restefreien Garraum zu erzeugen.

Es ist eine Weiterbildung, dass das erste Behandlungsmittel und das zweite Behandlungsmittel Reinigungsmittel sind, während das dritte Behandlungsmittel und das vierte Behandlungsmittel Wasser ist. So kann der Garraum zunächst mit den Schritten (b) bis (i) gereinigt werden und dann mit den Schritten (k) bis (r) besonders gründlich gespült werden, z.B. nachgespült und/oder klargespült werden. Das erste Behandlungsmittel und das zweite Behandlungsmittel neutralisieren sich vorzugsweise in dem ersten Tank.

Es ist noch eine Weiterbildung, dass das erste Behandlungsmittel und das dritte Behandlungsmittel Reinigungsmittel sind, während das zweite Behandlungsmittel und das vierte Behandlungsmittel Wasser ist. So kann der Garraum nach jeder Reinigung durch ein Reinigungsmittel gespült werden. Das zweite Behandlungsmittel verdünnt das erste Behandlungsmittel in dem ersten Tank, und das vierte Behandlungsmittel verdünnt das dritte Behandlungsmittel in dem zweiten Tank.

Der Garraum kann durch die mehreren Behandlungsmittel allgemein nacheinander behandelt werden.

Allgemein können auch mehr als zwei Reinigungsmittel nacheinander verwendet werden.

Es ist ferner eine Ausgestaltung, dass zumindest eines der in dem Garraum befindlichen Behandlungsmittel erwärmt wird. Dadurch kann eine Behandlungswirkung, insbesondere Reinigungswirkung, verbessert werden. Das Erwärmen kann in dem Garraum und/oder vor Einleiten in den Garraum erreicht werden. Beispielsweise kann der Garraum geheizt werden, um darin befindliches Behandlungsmittel zu erwärmen. Alternativ oder zusätzlich kann das Behandlungsmittel vor Einbringung in den Garraum als Flüssigkeit erwärmt werden und/oder verdampft werden. So kann z.B. der Zwischenspeicher heizbar sein und/oder eine Flüssigkeitsleitung kann heizbar sein, beispielsweise nach Art eines Durchlauferhitzers. Jedoch kann das Erwärmen auch ein Erwärmen ohne Verdampfen umfassen.

Es ist ferner eine Ausgestaltung, dass der Garraum durch Dampf mindestens eines Behandlungsmittels beaufschlagt wird oder beaufschlagbar ist. Da der Dampf alle Teile des Garraums einfach erreichten kann, lässt sich so seine besonders vollständige Behandlung erreichen. Zur Dampferzeugung kann z.B. der Garraum entsprechend erhitzt werden und/oder das Haushaltsgargerät kann mindestens ein Mittel zur Dampferzeugung (beispielsweise eine in dem Garraum vorgesehene Verdampferschale und/oder einen außerhalb des Garraums vorgesehenen Dampferzeuger) aufweisen.

Es ist außerdem eine Ausgestaltung, dass mindestens ein Behandlungsmittel umgewälzt wird, was eine Behandlungswirkung noch weiter verbessert. Unter dem Umwälzen werden insbesondere ein Entnehmen von Flüssigkeit aus dem Garraum und ein Wiedereinspeisen der entnommenen Flüssigkeit an anderer Stelle in den Garraum verstanden. Die Flüssigkeit wird insbesondere bodenseitig aus dem Garraum entnommen. Zum Umwälzen kann das Haushaltsgargerät eine Pumpe aufweisen. Dies kann die gleiche Pumpe sein, die auch zum Entleeren des ersten Tanks und/oder des zweiten Tanks verwendet wird, oder sie mag eine andere Pumpe sein. Das Wiedereinspeisen erfolgt vorteilhafterweise unter Druck, um Wände des Garraums effektiv abspritzen zu können, z.B. über eine Düse.

Es ist eine Weiterbildung, dass geräteseitig mindestens ein Behandlungszusatz mittels mindestens einer Dosiervorrichtung dosiert abgelassen wird, wobei der Behandlungszusatz zusammen mit klarem Wasser aus dem Zwischenspeicher das zugehörige Behandlungsmittel bildet. Der Behandlungszusatz oder Wirkzusatz kann beispielsweise ein flüssiger (z.B. als ein Konzentrat vorliegender) oder fester (z.B. pulverförmiger oder granularer) Zusatz sein, insbesondere ein in Wasser löslicher Zusatz. Diese Weiterbildung umfasst, dass ein Nutzer während eines Behandlungsablaufs die Behandlungszusätze nicht selbst hinzuzugeben braucht, sondern dies durch das Gerät durchgeführt oder veranlasst wird. Insbesondere kann so auf Zufuhrkanäle in den Garraum zum aufeinanderfolgenden nutzerseitigen Zuführen der Behandlungszusätze verzichtet werden. Die Dosiervorrichtung kann dauerhaft in dem Gargerät eingebaut sein. Sie kann alternativ nutzerseitig bzw. von einem Nutzer eingesetzt und wieder entnommen werden, z.B. nur für einen Reinigungsablauf eingesetzt werden. In diesem Fall ist insbesondere eine Aufnahme für die Dosiervorrichtung dauerhaft in dem Gargerät vorhanden.

Es ist eine besonders nutzerfreundliche und einfach umsetzbare Weiterbildung, dass die mindestens eine Dosiervorrichtung mindestens eine durch den Garraum einsetzbare Kartusche ist. Die Kartusche kann dazu eine Einmal- oder Wegwerf-Kartusche sein. Die Kartusche kann beispielsweise eine Reinigungskartusche der Fa. Gaggenau sein. Die Kartusche kann mehrere Kammern aufweisen, in denen jeweilige Behandlungszusätze untergebracht sind. Die Kartusche kann gegen den Garraum z.B. durch jeweilige Absperrwände aus Wachs o.ä. abgetrennt sein. Eine aufeinanderfolgende Abgabe der Behandlungszusätze in den Garraum kann beispielsweise geräteseitig dadurch gesteuert werden, dass die Absperrwände eine unterschiedliche Schmelztemperatur aufweisen und das Haushaltsgargerät dazu eingerichtet ist, eine Garraumtemperatur entsprechend einem Zeitpunkt der gewünschten Abgabe eines Behandlungszusatzes einzustellen.

Alternativ oder zusätzlich kann mindestens eine durch das Haushaltsgargerät elektrisch steuerbare Dosiervorrichtung mindestens ein Behandlungsmittel in den Garraum oder in ein außerhalb des Garraums befindliches Behältnis abgeben, beispielsweise in den Zwischenspeicher.

Es ist ferner eine Ausgestaltung, dass mindestens eine Eigenschaft eines Inhalts mindestens eines der Tanks mittels mindestens eines Sensors detektiert wird. Dadurch kann eine in dem jeweiligen Tank befindliche Flüssigkeit auf einen vorgegebenen Sollwert oder Sollbereich eingestellt werden und/oder mit Erreichen eines vorgegebenen Werts oder Wertebereichs mindestens eine Aktion ausgelöst werden, z.B. ein optisches und/oder akustisches Warnsignal ausgelöst oder ausgeschaltet werden, ein Tank zu seiner Entnahme entriegelt werden usw.

Es ist eine Weiterbildung, dass ein pH-Wert detektiert wird, z.B. mittels eines pH-Sensors. So kann überprüft werden, ob ein Inhalt des Tanks ausreichend neutral ist, um sicher entnommen oder abgelassen werden zu können.

Es ist auch eine Weiterbildung, dass ein Temperaturwert detektiert wird, z.B. mittels eines Temperatursensors. So kann überprüft werden, ob ein Inhalt des Tanks ausreichend kalt ist, um sicher entnommen oder abgelassen werden zu können.

Es ist auch eine Weiterbildung, dass mindestens ein Füllstand detektiert wird, z.B. mittels eines Füllstandssensors (z.B. eines Schwimmers, mittels Ultraschall usw.). So kann überprüft werden, ob ein Tank droht, überzulaufen.

Es ist außerdem noch eine Ausgestaltung, dass die Tanks gegen eine Entnahme verriegelt und zur Entnahme entriegelt werden können. Dazu kann das Haushaltsgargerät z.B. eine entsprechende Verriegelungseinrichtung aufweisen, die beispielsweise mit einer Steuereinrichtung des Gargeräts verbunden ist und über diese ansteuerbar ist. So kann z.B. verhindert werden, dass die Tanks während einer Behandlung mittels eines Behandlungsmittels, bei einer zu heißen Flüssigkeit, bei einer nicht ausreichend neutralen Flüssigkeit usw. entnommen werden. Die wahlweise Verriegelung und/oder Entriegelung kann sensorgesteuert durchgeführt werden. Die wahlweise Verriegelung und/oder Entriegelung kann auch zeit- oder programmgesteuert sein, z.B. abhängig von einem Erreichen eines bestimmten Programmabschnitts. So können die Tanks vor Schritt (b) verriegelt und nach Schritt (r) entriegelt werden.

Die Aufgabe wird auch gelöst durch ein Gargerät, insbesondere ein Haushalts-Gargerät, das zur Durchführung des oben beschriebenen Verfahrens eingerichtet ist. Das Gargerät kann analog zu dem Verfahren ausgebildet sein und weist die gleichen Vorteile auf.

Es ist eine Ausgestaltung, dass das Gargerät ein Backofen ist, da bei einem Backofen typischerweise ein besonders hoher Reinigungsbedarf besteht und Backöfen in der Regel keinen Wasseranschluss aufweisen. Dass kann bei dem Gargerät beispielsweise auf eine Pyrolysefunktion verzichtet werden. Für den Fall eines Backofens kann der Garraum auch als ein Ofenraum bezeichnet werden. Das Gargerät kann ferner eine Mikrowellenfunktionalität aufweisen.

Das Gargerät kann zudem eine Dampfgarfunktion aufweisen, z.B. zusätzlich zu einem Backofen, oder kann ein eigenständiger Dampfgarer sein.

Es ist eine Weiterbildung, dass ein Boden des Garraums wahlweise mit dem Tank oder mit den Tanks verbindbar ist. So kann Flüssigkeit praktisch vollständig aus dem Garraum entfernt werden. Die Verbindung (beispielsweise ein Flüssigkeitskanal) kann geräteseitig mittels einer Absperrvorrichtung wahlweise unterbrochen sein oder geöffnet werden (z.B. zum Belassen bzw. zum Ablassen eines Behandlungsmittels in den Tank oder in einen der Tanks). Die Absperrvorrichtung kann z.B. ein steuerbares Ventil sein oder aufweisen.

Es ist ferner eine Ausgestaltung, dass das Gargerät einen Flüssigkeitskreislauf aufweist, in dem Flüssigkeit umgewälzt wird, wobei der Garraum einen Teil des Flüssigkeitskreislaufs darstellt. Weil so Flüssigkeit aus dem Garraum abführbar ist (z.B. bodenseitig) und an anderer Stelle wieder in den Garraum einbringbar ist, wird bei Verwendung eines Behandlungsmittels in Form von Flüssigkeit eine besonders effiziente Behandlung des Garraums ermöglicht. Es ist eine Weiterbildung, dass der Umwälzkreislauf keinen Tank als eine Komponente aufweist, also kein Tank einen Teil des Umwälzkreislaufs darstellt.

Das Gargerät weist für seinen automatischen Betrieb vorteilhafterweise eine Steuereinrichtung auf, z.B. zum Aktivieren oder Deaktivieren von Heizungen, Pumpen, Ventilen, Verriegelungseinrichtungen usw. Die Steuereinrichtung kann zum Ablauf mindestens einer Programmautomatik eingerichtet sein, beispielsweise zum Ablauf von Garprogrammen und Reinigungsprogrammen.

Das Gargerät weist insbesondere keinen Wasseranschluss an ein Wasserversorgungsnetz und keinen Wasserablauf auf.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.
- Fig.1: zeigt ein erfindungsgemäßes Gargerät; und
- Fig.2 bis 14: zeigen das Gargerät zu verschiedenen Verfahrensschritten eines Reinigungsablaufs.

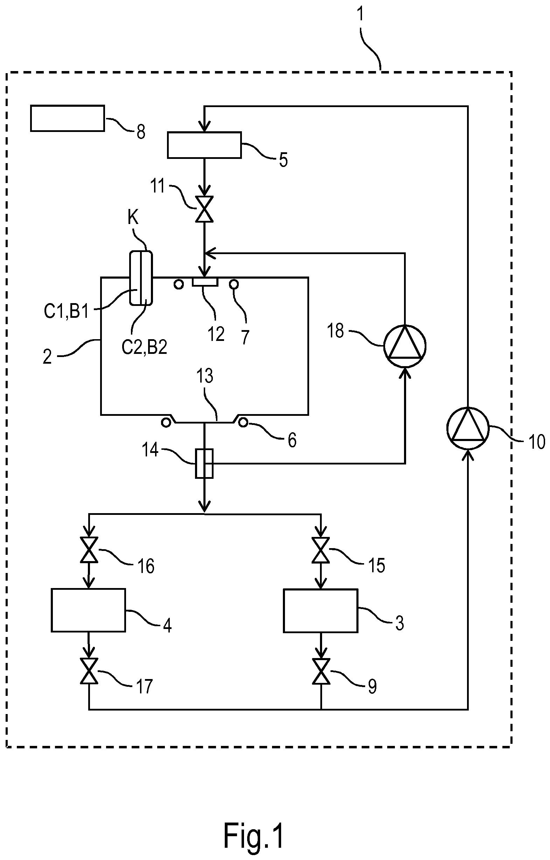

**Fig.1** zeigt ein Haushaltsgargerät 1 mit einem Garraum 2, einem ersten durch einen Nutzer entnehmbaren Tank 3, einem zweiten durch einen Nutzer entnehmbaren Tank 4 und einem Zwischenspeicher 5.

Der Garraum 2 ist mittels elektrisch betriebener Heizungen 6 und 7 erhitzbar, die mittels einer Steuereinrichtung 8 aktiviert und/oder deaktiviert werden können. Die Heizung 6 entspricht hier einem Unterhitzeheizkörper, die Heizung 7 einem Oberhitzeheizkörper. Eine Umluftheizung mag auch vorhanden sein, ist aber nicht gezeigt.

In eine Decke des Garraums 2 ist eine Dosiervorrichtung in Form einer Einweg-Reinigungskartusche K einsetzbar, die zwei Kammern C1 und C2 aufweist. In einem unverbrauchten Zustand ist die erste Kammer C1 mit einem alkalischen Reinigungszusatz B1 gefüllt, während die zweite Kammer C2 mit einem sauren Reinigungszusatz B2 gefüllt ist. Dosieröffnungen (o. Abb.) der Kammern C1 und C2 sind gegenüber dem Garraum 2 mittels jeweiliger Verschlusselemente abgetrennt, die temperaturabhängig schmelzen können, da sie z.B. aus Wachs bestehen. Die Verschlusselemente sind also dem Garraum 2 ausgesetzt. Dabei ist eine Schmelztemperatur des Verschlusselements der ersten Kammer C1 niedriger als eine Schmelztemperatur des Verschlusselements der zweiten Kammer C2. Bei offenen Dosieröffnungen werden die Zusätze B1 bzw. B2 direkt in den Garraum 2 abgegeben.

Der erste Tank 3 ist über ein Absperrventil 9 mit einer Saugseite einer Pumpe 10 verbunden. Eine Druckseite der Pumpe 10 ist mit dem Zwischenspeicher 5 verbunden, so dass die Pumpe 10 Flüssigkeit, insbesondere Wasser, aus dem ersten Tank 3 in den Zwischenspeicher 5 pumpen kann.

Der Zwischenspeicher 5 ist mit dem Garraum 2 über ein Absperrventil 11 verbunden, so dass bei geöffnetem Absperrventil 11 in dem Zwischenspeicher 5 gespeicherte Flüssigkeit in den Garraum 2 fließen kann. Dabei kann die Flüssigkeit über eine z.B. deckenseitig in dem Garraum 2 angeordnete Düse 12 o.ä. in den Garraum 2 eingeleitet werden.

In dem Boden des Garraums 2 ist z.B. mittig eine durch die Heizung 6 erhitzbare schalenförmige Vertiefung ("Verdampferschale") 13 eingebracht. In der Verdampferschale 13 befindliche Flüssigkeit kann durch Aktivierung der Heizung 6 verdampft werden. Aus der Verdampferschale 13 kann Flüssigkeit über ein 3/2-Wegeventil 14 entweder (z.B. in einer ersten Schaltstellung) in den ersten Tank 3 oder in den zweiten Tank 4 oder (z.B. in einer zweiten Schaltstellung) zu einer weiteren Pumpe 18 abgelassen werden. Die weitere Pumpe 18 ist druckseitig mit der Düse 12 verbunden, so dass sie Flüssigkeit, insbesondere Wasser, bodenseitig aus dem Garraum 2 absaugen kann und druckbeaufschlagt deckenseitig wieder in den Garraum 2 pumpen kann. Dabei kann durch die Düse 12 die Flüssigkeit großflächig an die Wände des Garraums 2 gesprüht werden. Das Haushaltsgargerät 1 weist also einen Umwälzkreislauf auf, der den Garraum 2 und die weitere Pumpe 18, aber keinen der beiden Tanks 3 und 4 aufweist.

Um dem 3/2-Wegeventil 14 in seiner ersten Schaltstellung aus dem Garraum 2 abfließende Flüssigkeit gezielt in den ersten Tank 3 oder in den zweiten Tank 4 leiten zu können, kann zwischen dem 3/2-Wegeventil 14 und den Tanks 3 und 4 jeweils ein Absperrventil 15 bzw. 16 vorhanden sein. Bei geöffnetem Absperrventil 15 oder 16 kann der jeweilige Tank 3 bzw. 4 mit Flüssigkeit aus dem Garraum 2 befüllt werden.

Um ein Abfließen von Flüssigkeit aus dem Garraum 2 besonders sicher verhindern zu können, ist es eine Weiterbildung, dass zwischen dem Garraum 2 und dem 3/2-Wegeventil 14 ein weiteres Absperrventil (nicht gezeigt) vorhanden ist. Es ist noch eine Weiterbildung, dass das weitere Absperrventil dem 3/2-Wegeventil 14 unmittelbar nachgeschaltet ist. Es ist noch eine zum gleichen Zweck vorteilhafte Weiterbildung, dass das 3/2-Wegeventil 14 sperrend schaltbar ist bzw. eine Absperrstellung aufweist. Es mag dann auch als ein 3/3-Wegeventil bezeichnet werden. Insbesondere für diese Weiterbildungen kann anstelle der beiden Absperrventile 15 und 16 auch ein einzelnes 3/2-Wegeventil (o. Abb.) vorgesehen sein.

Der zweite Tank 4 ist über ein Absperrventil 17 mit der Saugseite der Pumpe 10 verbunden, so dass Flüssigkeit, insbesondere Wasser, mittels der Pumpe 10 aus dem zweiten Tank 4 in den Zwischenspeicher 5 gepumpt werden kann.

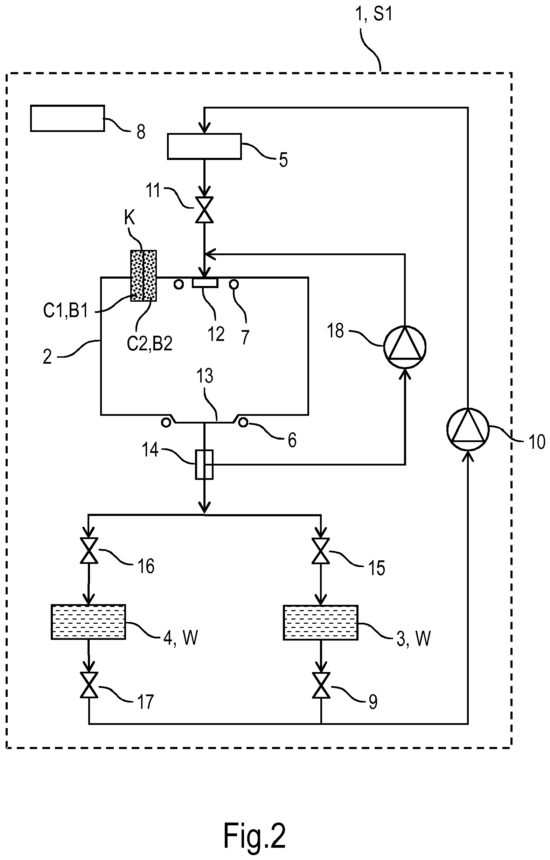

Das Haushaltsgargerät 1 kann insbesondere folgendermaßen betrieben werden:
Ein Nutzer setzt eine volle Kartusche K in den Garraum 2 ein. Der Nutzer hat zudem in einem ersten Schritt entsprechend den Schritten a und j des Verfahrens den ersten Tank 3 und den zweiten Tank 4 mit klarem Wasser W aufgefüllt, wie in **Fig.2** angedeutet. Der Zwischenspeicher 5 ist hingegen leer. Nun aktiviert der Nutzer ein Reinigungsprogramm, so dass das Haushaltsgargerät 1 die weiteren Schritte vollautomatisch durchführt. Er kann das Reinigungsprogramm aber z.B. auch schon vor Schritt a, j aktiviert haben.

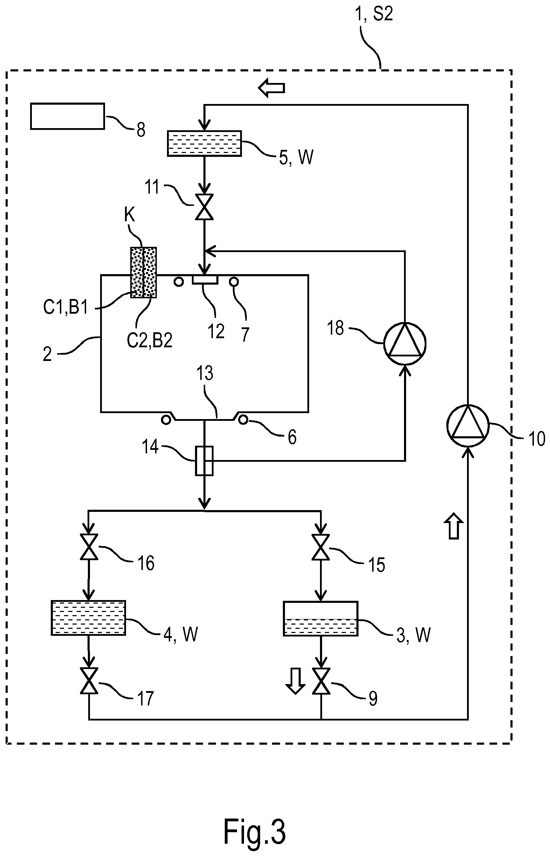

In einem in **Fig.3** angedeuteten zweiten Schritt b öffnet die Steuereinrichtung 8 nun das Absperrventil 9 und aktiviert die Pumpe 10 so, dass in etwa die Hälfte des in dem ersten Tank 3 befindlichen klaren Wassers W in den Zwischenspeicher 5 verbracht wird (wobei ein Fluss des Wassers W durch die offenen Pfeile angedeutet ist).

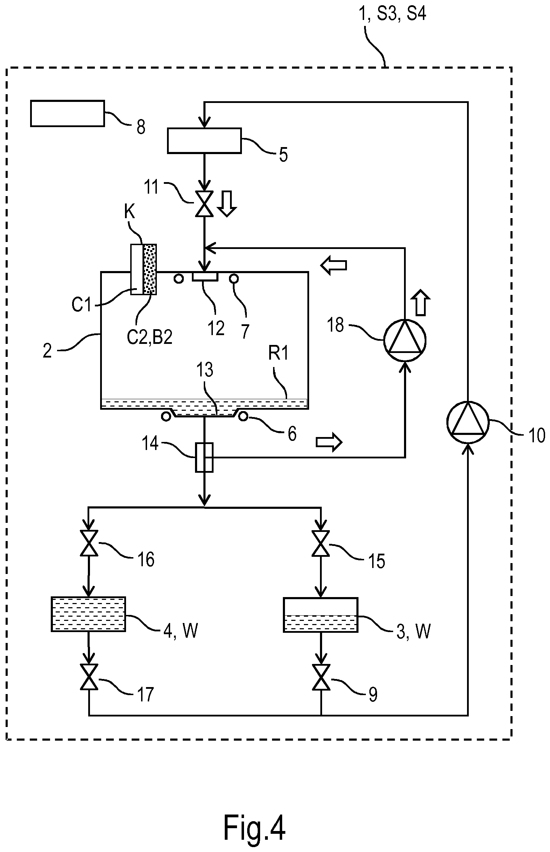

In dem in **Fig.4** angedeuteten dritten Schritt c wird das in dem Zwischenspeicher 5 befindliche Wassers W durch Öffnen des Absperrventils 11 in den Garraum 2 abgelassen. Zudem wird der Garraum 2 auf eine Garraumtemperatur angehoben, bei der das Verschlusselement der Kammer C1 schmilzt, das Verschlusselement der Kammer C2 aber nicht. Dadurch öffnet sich die Dosieröffnung der Kammer C1, worauf der alkalische Reinigungszusatz B1 in den Garraum 2 gelangt und sich dort mit dem aus dem Zwischenspeicher 5 angelassenen Wasser W zu einem ersten, alkalischen Reinigungsmittel R1 mischt, insbesondere sich dazu in dem Wasser W löst. Dadurch wird das erste Reinigungsmittel R1 in dem Garraum 2 bereitgestellt. Das Reinigungsmittel R1 kann als alkalische Lösung z.B. einen pH-Wert von über 11 aufweisen.

In einem folgenden, auch in der Fig.4 angedeuteten, vierten Schritt d wird das erste Reinigungsmittel R1 für eine erste Zeitdauer in dem Garraum 2 belassen, um insbesondere durch seine alkalische Wirkung Fett zu lösen.

Um eine Reinigungswirkung zu verbessern, wird dabei das sich in der Verdampferschale 13 befindliche flüssige erste Reinigungsmittel R1 verdampft, z.B. durch eine entsprechende Aktivierung der Heizung 6. So kann der Garraum 2 ganzflächig benetzt werden.

Allgemein wird eine Reinigungswirkung verbessert, wenn das erste Reinigungsmittel R1 erwärmt wird, und zwar auch dann, wenn es nicht verdampft wird. Dazu kann z.B. mindestens eine Garraumheizung wie eine der Heizungen 5 und/oder 6 und/oder eine Umluftheizung, aktiviert werden.

Um die Reinigungswirkung noch weiter zu verbessern, wird flüssiges Reinigungsmittel R1 zusätzlich oder alternativ umgewälzt, z.B. durch eine entsprechende Aktivierung der weiteren Pumpe 18. So kann der Garraum 2 über die Düse 12 großflächig besprüht werden. Das 3/2-Wegeventil 14 befindet sich dazu in seiner zweiten Schaltstellung.

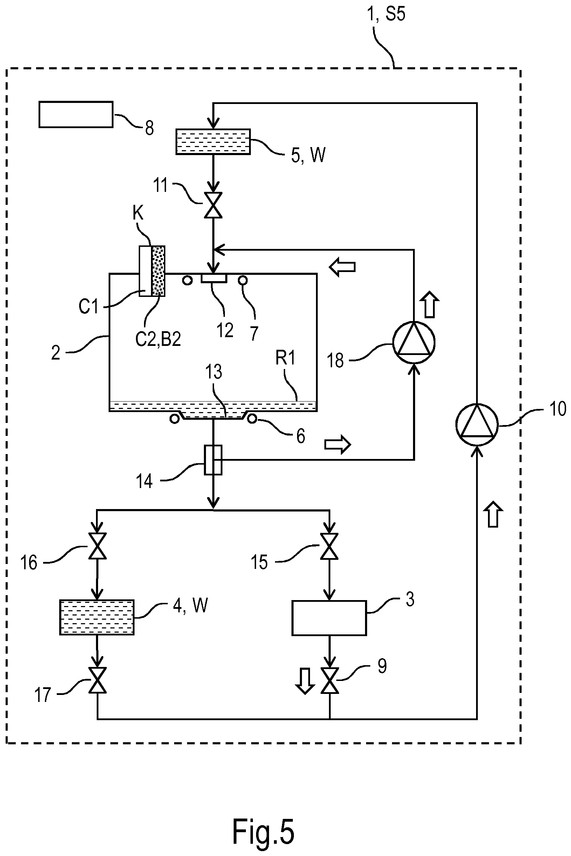

In einem in **Fig.5** angedeuteten weiteren Schritt e wird das restliche klare Wasser W des ersten Tanks 3 in den Zwischenspeicher 5 gepumpt, während sich das erste Reinigungsmittel R1 noch in dem Garraum 2 befindet.

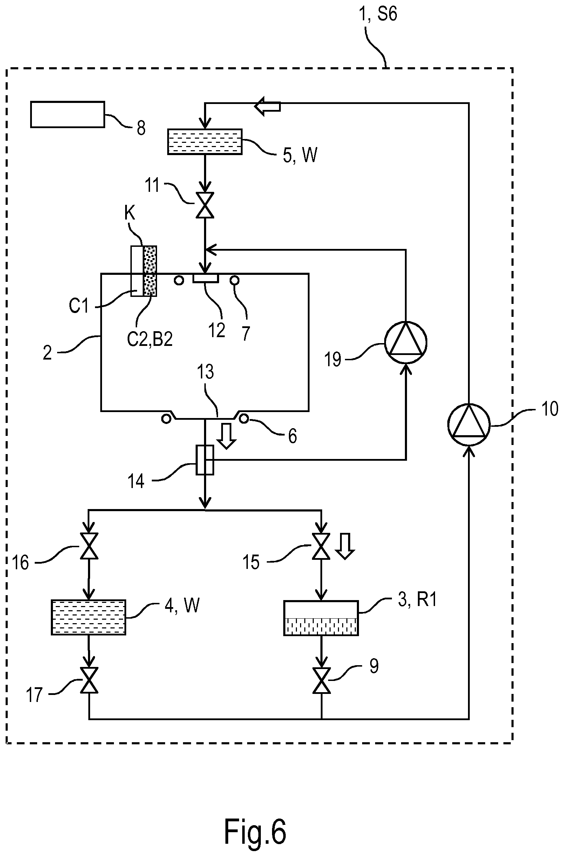

Folgend wird, wie in **Fig.6** gezeigt, in einem Schritt f das Reinigungsmittel R1 aus dem Garraum 2 in den ersten Tank 3 abgelassen, ggf. unter Ausschaltung der Heizung 6 und unter Nachlauf der weiteren Pumpe 18. Dazu befindet sich das 3/2-Wegeventil 14 nun in seiner ersten Schaltstellung, das Absperrventil 15 ist geöffnet und das Absperrventil 16 ist geschlossen. Danach wird der Ablauf aus dem Garraum 2 wieder gesperrt.

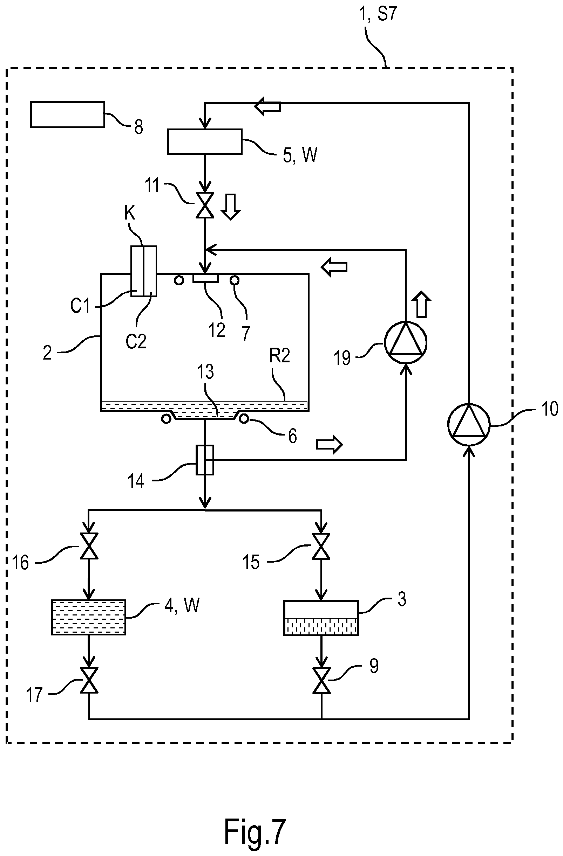

**Fig.7** deutet einen folgenden Schritt g an, bei dem durch Öffnen des Absperrventils 11 das in dem Zwischenspeicher 5 befindliche Wasser W in den Garraum 2 abgelassen worden ist. Die Garraumtemperatur wird nun so stark angehoben, dass das Verschlusselement der Kammer C2 schmilzt. Dadurch öffnet sich die Dosieröffnung der Kammer C2, worauf der saure Reinigungszusatz B2 in den Garraum 2 gelangt und sich dort mit dem aus dem Zwischenspeicher 5 angelassenen Wasser W zu einem zweiten, sauren Reinigungsmittel R2 mischt, insbesondere sich dazu in dem Wasser W löst. Dadurch wird das zweite Reinigungsmittel R2 in dem Garraum 2 bereitgestellt. Das Reinigungsmittel R2 kann als saure Lösung z.B. einen pH-Wert von unter 2 aufweisen.

In einem Schritt h, der auch in Fig.7 angedeutet ist, kann analog zu Schritt d das zweite Reinigungsmittel R2 für eine zweite Zeitdauer in dem Garraum 2 belassen werden, vorteilhafterweise unter Umwälzung und Erwärmung.

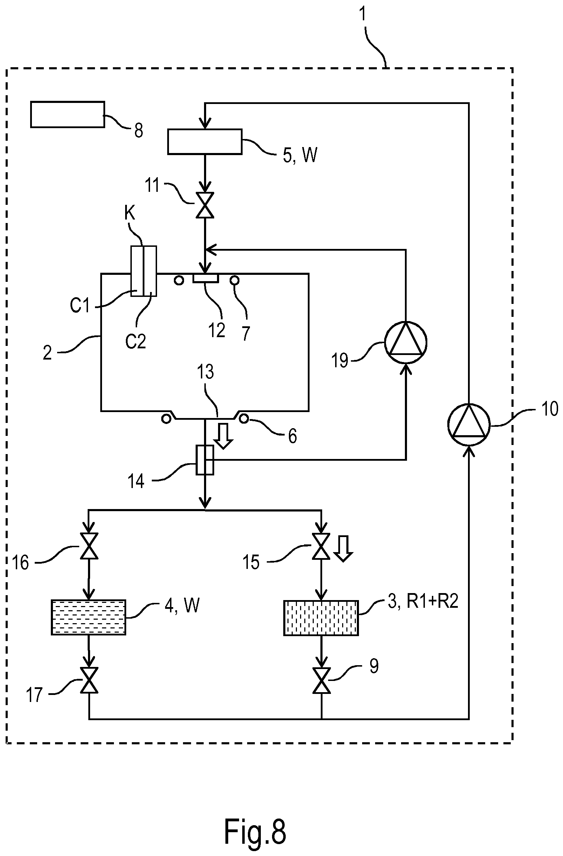

**Fig.8** zeigt einen Schritt i, bei dem das zweite Reinigungsmittel R2 nun in den ersten Tank 3 abgelassen worden ist. In dem ersten Tank 3 neutralisieren sich das erste Reinigungsmittel R1 und das zweite Reinigungsmittel R2 weitgehend, z.B. zu einer vollständig neutralen, einer leicht sauren oder einer leicht neutralen Flüssigkeit, die für einen Nutzer gefahrlos handhabbar ist.

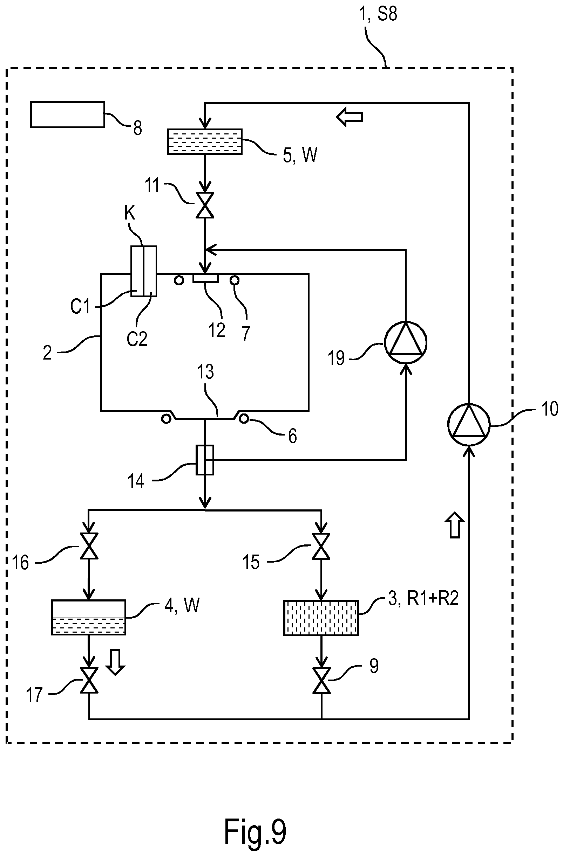

**Fig.9** zeigt - analog zu Schritt b - einen Schritt k, bei dem nun durch Öffnen des Absperrventils 17 und aktivieren der Pumpe 10 ca. die Hälfte des in dem zweiten Tank 4 befindlichen Wassers W in den Zwischenspeicher 5 verbracht wird.

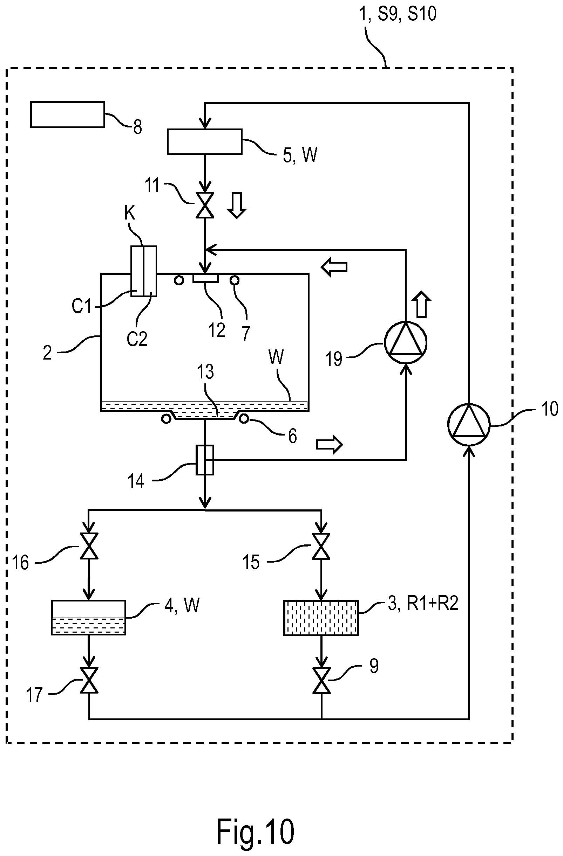

**Fig.10** zeigt einen Zustand des Haushaltsgargeräts 1, bei dem in einem zu Schritt c analogen Schritt I das Wasser W aus dem Zwischenspeicher 5 abgelassen worden ist. Da die Kartusche K bereits leer ist, wird das Wasser W als solches als Behandlungsmittel verwendet, nämlich zum Nachspülen, um Reste der Reinigungsmittel R1 und/oder R2 aus dem Garraum 2 usw. zu entfernen.

In einem Schritt m wird dazu das Wasser W für eine dritte Behandlungsdauer in dem Garraum 2 belassen, vorteilhafterweise unter Umwälzung und/oder Erwärmung.

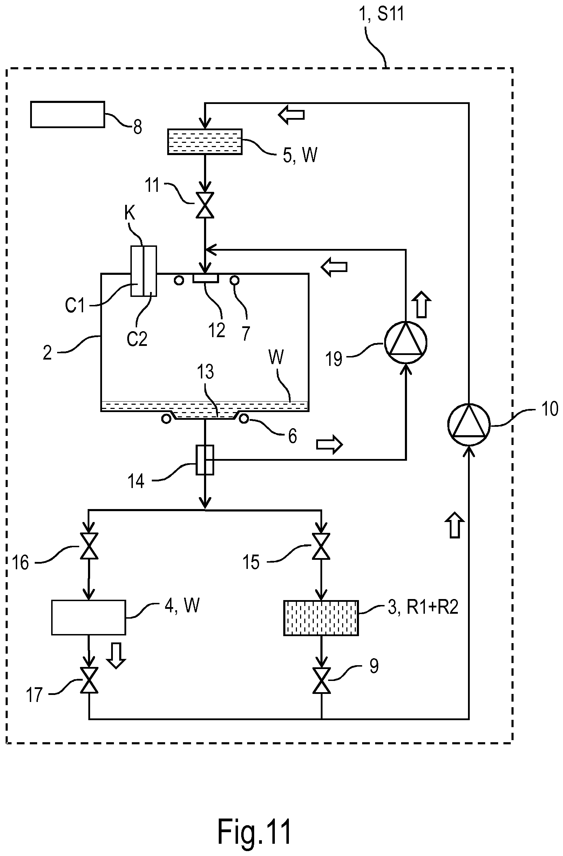

**Fig.11** zeigt einen Schritt n, in dem - analog zu Schritt e - das restliche klare Wasser W des zweiten Tanks 4 in den Zwischenspeicher 5 gepumpt wurde, während sich das zum Nachspülen verwendete Wasser W noch in dem Garraum 2 befindet.

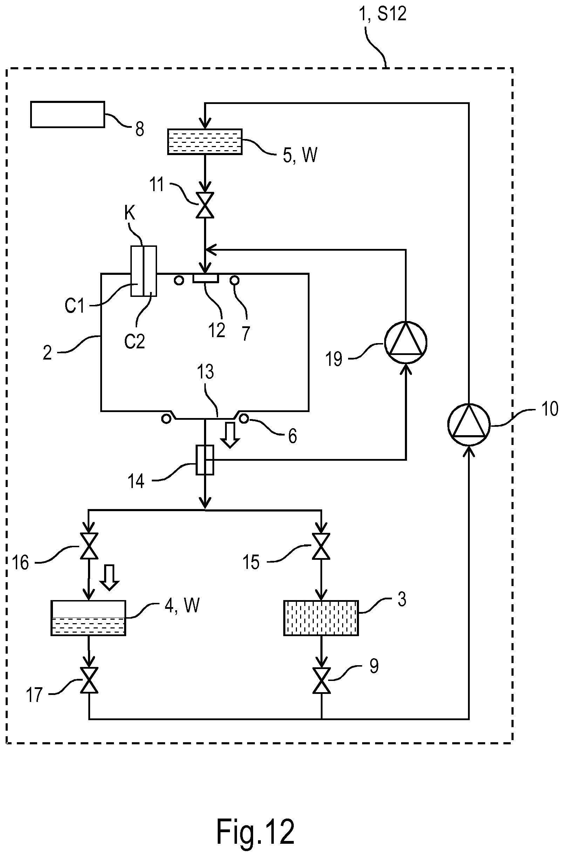

**Fig.12** zeigt einen Schritt o, in dem - analog zu Schritt f - das jetzt mit Resten des Reinigungsmittels R1 und/oder R2 versetzte Wasser W in den zweiten Tank 4 abgelassen, ggf. unter Ausschaltung der Heizung 6 und unter Nachlauf der weiteren Pumpe 18.

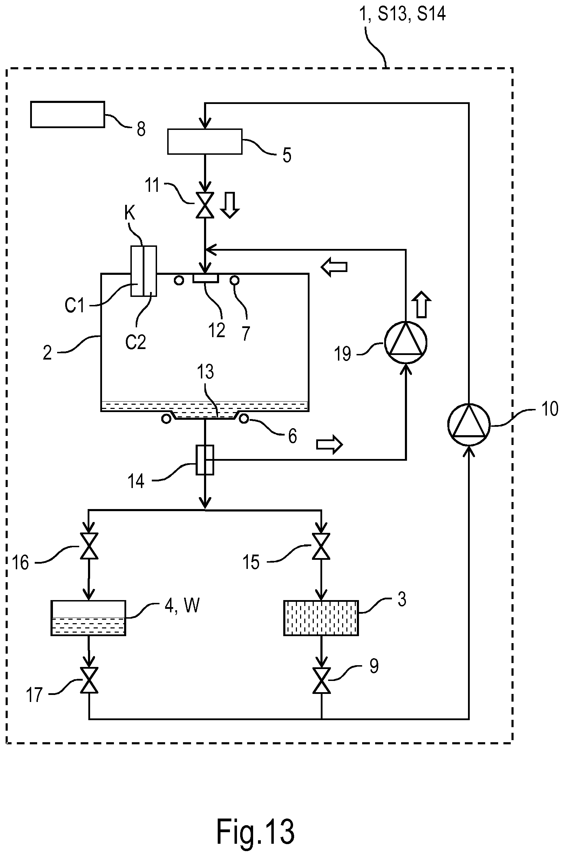

**Fig.13** zeigt einen Schritt p, in dem - analog zu Schritt g - durch Öffnen des Absperrventils 11 das in dem Zwischenspeicher 5 befindliche Wasser W in den Garraum 2 abgelassen worden ist. Das Wasser W dient als viertes Behandlungsmittel, beispielsweise zum Klarspülen.

Dann wird in einem Schritt q - z.B. analog zu Schritt h - das Wasser W für eine zweite Zeitdauer in dem Garraum 2 belassen, vorteilhafterweise unter Umwälzung und Erwärmung.

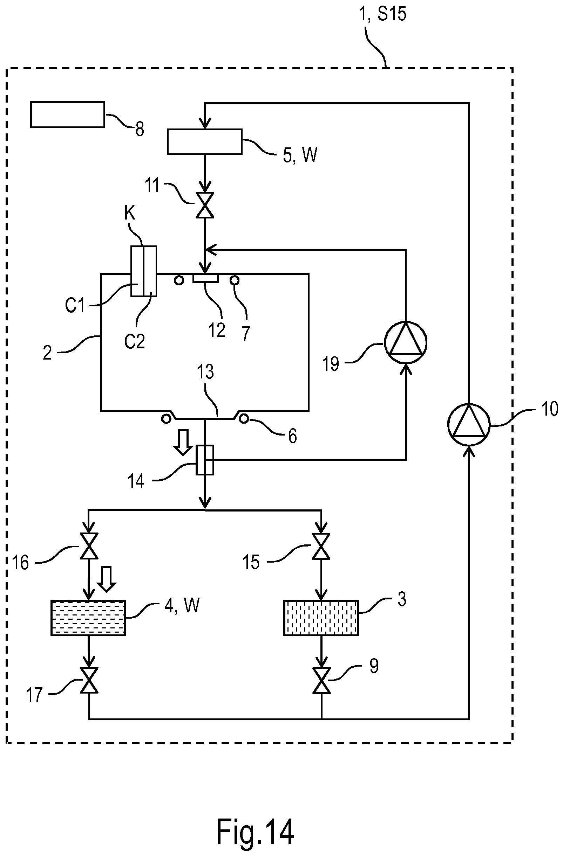

**Fig.14** deutet einen Schritt r an, bei dem das Wasser W aus dem Garraum 2 in den zweiten Tank 4 abgelassen wird. Es sind nun also beide Tanks 3 und 4 wieder gefüllt und können von einem Nutzer zur Entleerung entnommen werden.

Allgemein kann das Haushaltsgargerät 1 die Tanks 3 und 4 gegen eine Entnahme verriegeln, z.B. während des Reinigungsablaufs, falls eine Temperatur der Inhalte der Tanks 3 und/oder 4 noch zu hoch ist usw.

Selbstverständlich ist die vorliegende Erfindung nicht auf das gezeigte Ausführungsbeispiel beschränkt.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichenliste

- 1: Haushaltsgargerät
- 2: Garraum
- 3: Erster Tank
- 4: Zweiter Tank
- 5: Zwischenspeicher
- 6: Heizung
- 7: Heizung
- 8: Steuereinrichtung
- 9: Absperrventil
- 10: Pumpe
- 11: Absperrventil
- 12: Düse
- 13: Verdampferschale
- 14: 3/2-Wegeventil
- 15: Absperrventil
- 16: Absperrventil
- 17: Absperrventil
- 18: Weitere Pumpe
- B1: Alkalischer Reinigungszusatz
- B2: Saurer Reinigungszusatz
- C1: Kammer der Einweg-Reinigungskartusche für den alkalischer Reinigungszusatz
- C2: Kammer der Einweg-Reinigungskartusche für den sauren Reinigungszusatz
- K: Einweg-Reinigungskartusche
- R1: Erstes Reinigungsmittel
- R2: Zweites Reinigungsmittel
- W: Wasser

## Patentansprüche

1. Verfahren (a-r) zum Durchführen eines Reinigungsablaufs eines Gargeräts (1) mit mindestens folgenden Schritten:
(a) Nutzerseitiges Auffüllen eines ersten Tanks (3) des Gargeräts (1) mit Wasser (W),
(b) Verbringen eines ersten Anteils des in dem ersten Tank (3) befindlichen Wassers (W) in einen Zwischenspeicher (5) des Gargeräts (1),
(c) Verbringen des in dem Zwischenspeicher (5) befindlichen Wassers (W) in einen Garraum (2) des Gargeräts (1) zum Bereitstellen eines ersten Behandlungsmittels (R1) in dem Garraum,
(d) Belassen des ersten Behandlungsmittels (R1) in dem Garraum (2) für eine erste Zeitdauer,
(e) Verbringen eines zweiten Anteils des in dem ersten Tank (3) befindlichen Wassers in den Zwischenspeicher (5),
(f) Verbringen des ersten Behandlungsmittels (R1) in den ersten Tank (3),
(g) Verbringen des in dem Zwischenspeicher (5) befindlichen Wassers (W) in den Garraum (2) zum Bereitstellen eines zweiten Behandlungsmittels (R2) in dem Garraum,
(h) Belassen des zweiten Behandlungsmittels (R2) in dem Garraum (2) für eine zweite Zeitdauer und
(i) Verbringen des zweiten Behandlungsmittels (R2) in den ersten Tank (3).

2. Verfahren (a-r) nach Anspruch 1, bei dem sich das erste Behandlungsmittel (R1) und das zweite Behandlungsmittel (R2) gegenseitig neutralisieren.

3. Verfahren (a-r) nach Anspruch 1, bei dem das zweite Behandlungsmittel klares Wasser ist.

4. Verfahren (a-r) nach Anspruch 1, bei dem das erste Behandlungsmittel klares Wasser ist.

5. Verfahren (a-r) nach einem der vorhergehenden Ansprüche, das zusätzlich mindestens folgende Schritte aufweist:
(j) Nutzerseitiges Auffüllen eines zweiten Tanks (4) des Gargeräts (1) mit Wasser (W),
(k) Verbringen eines ersten Anteils des in dem zweiten Tank (4) befindlichen Wassers (W) in einen Zwischenspeicher (5) des Gargeräts (1),
(l) Verbringen des in dem Zwischenspeicher (5) befindlichen Wassers (W) in den Garraum (2) zum Bereitstellen eines dritten Behandlungsmittels (W),
(m) Belassen des dritten Behandlungsmittels (W) in dem Garraum (2) für eine dritte Zeitdauer,
(n) Verbringen eines zweiten Anteils des in dem zweiten Tank (4) befindlichen Wassers (W) in den Zwischenspeicher (5),
(o) Verbringen des zweiten Behandlungsmittels (W) in den zweiten Tank (4),
(p) Verbringen des in dem Zwischenspeicher (5) befindlichen Wassers (W) in den Garraum (2) zum Bereitstellen eines vierten Behandlungsmittels (W),
(q) Belassen des vierten Behandlungsmittels (W) in dem Garraum (2) für eine vierte Zeitdauer und
(r) Verbringen des vierten Behandlungsmittels (W) in den zweiten Tank (4).

6. Verfahren (a-r) nach Anspruch 5, bei dem das vierte Behandlungsmittel (W) klares Wasser ist.

7. Verfahren (a-r) nach Anspruch 6, bei dem das dritte Behandlungsmittel (W) klares Wasser ist.

8. Verfahren (a-r) nach einem der vorhergehenden Ansprüche, bei dem zumindest eines der in dem Garraum (2) befindlichen Behandlungsmittel (R1, R2, W) erwärmt wird.

9. Verfahren (a-r) nach einem der vorhergehenden Ansprüche, bei dem der Garraum (2) durch Dampf mindestens eines Behandlungsmittels (R1, R2, W) beaufschlagt wird.

10. Verfahren (a-r) nach einem der vorhergehenden Ansprüche, bei dem mindestens ein Behandlungsmittel (R1, R2, W) umgewälzt wird.

11. Gargerät (1), insbesondere Haushaltsgargerät, das zum Durchführen eines Reinigungsablaufs eingerichtet ist, wobei das Gargerät (1) einen Garraum (2) und einen nutzerseitig befüllbaren ersten Tank (3) aufweist, **dadurch gekennzeichnet, dass** das Gargerät (1) zur Durchführung des Verfahrens (a-r) nach einem der vorhergehenden Ansprüche eingerichtet ist.

12. Gargerät nach Anspruch 11, **dadurch gekennzeichnet, dass** das Gargerät (1) zur Durchführung des Verfahrens (a-r) nach einem der Ansprüche 5 bis 10 eingerichtet ist und dazu einen nutzerseitig befüllbaren zweiten Tank (4) aufweist.

## Claims

1. Method (a-r) for carrying out a cleaning procedure for a cooking appliance (1) with at least the following steps:
(a) a user filling a first tank (3) of the cooking appliance (1) with water (W),
(b) moving a first portion of the water (W) present in the first tank (3) into a buffer store (5) of the cooking appliance (1),
(c) moving the water (W) present in the buffer store (5) into a cooking chamber (2) of the cooking appliance (1) to provide a first treatment agent (R1) in the cooking chamber,
(d) leaving the first treatment agent (R1) in the cooking chamber (2) for a first time period,
(e) moving a second portion of the water present in the first tank (3) into the buffer store (5),
(f) moving the first treatment agent (R1) into the first tank (3),
(g) moving the water (W) present in the buffer store (5) into the cooking chamber (2) to provide a second treatment agent (R2) in the cooking chamber,
(h) leaving the second treatment agent (R2) in the cooking chamber (2) for a second time period and
(i) moving the second treatment agent (R2) into the first tank (3).

2. Method (a-r) according to claim 1, in which the first treatment agent (R1) and the second treatment agent (R2) neutralise one another.

3. Method (a-r) according to claim 1, in which the second treatment agent is clear water.

4. Method (a-r) according to claim 1, in which the first treatment agent is clear water.

5. Method (a-r) according to one of the preceding claims, which additionally has at least the following steps:
(j) a user filling a second tank (4) of the cooking appliance (1) with water (W),
(k) moving a first portion of the water (W) present in the second tank (4) into a buffer store (5) of the cooking appliance (1),
(1) moving the water (W) present in the buffer store (5) into the cooking chamber (2) to provide a third treatment agent (W),
(m) leaving the third treatment agent (W) in the cooking chamber (2) for a third time period,
(n) moving a second portion of the water (W) present in the second tank (4) into the buffer store (5),
(o) moving the second treatment agent (W) into the second tank (4),
(p) moving the water (W) present in the buffer store (5) into the cooking chamber (2) to provide a fourth treatment agent (W),
(q) leaving the fourth treatment agent (W) in the cooking chamber (2) for a fourth time period and
(r) moving the fourth treatment agent (W) into the second tank (4).

6. Method (a-r) according to claim 5, in which the fourth treatment agent (W) is clear water.

7. Method (a-r) according to claim 6, in which the third treatment agent (W) is clear water.

8. Method (a-r) according to one of the preceding claims, in which at least one of the treatment agents (R1, R2, W) present in the cooking chamber (2) is heated.

9. Method (a-r) according to one of the preceding claims, in which steam of at least one treatment agent (R1, R2, W) is applied to the cooking chamber (2).

10. Method (a-r) according to one of the preceding claims, in which at least one treatment agent (R1, R2, W) is circulated.

11. Cooking appliance, in particular a domestic cooking appliance, which is designed to carry out a cleaning procedure, wherein the cooking appliance (1) has a cooking chamber (2) and a first tank (3) that can be filled by a user, **characterised in that** the cooking appliance (1) is designed to carry out the method (a-r) according to one of the preceding claims.

12. Cooking appliance according to claim 11, **characterised in that** the cooking appliance (1) is designed to carry out the method (a-r) according to one of claims 5 to 10 and to this end has a second tank (4) that can be filled by a user.

## Revendications

1. Procédé (a-r) destiné à mettre en oeuvre une séquence de nettoyage d'un appareil de cuisson (1), comprenant au moins les étapes suivantes :
(a) remplissage côté utilisateur d'une première cuve (3) de l'appareil de cuisson (1) avec de l'eau (W),
(b) affectation d'une première partie de l'eau (W) se trouvant dans la première cuve (3) à un réservoir intermédiaire (5) de l'appareil de cuisson (1),
(c) affectation de l'eau (W) se trouvant dans le réservoir intermédiaire (5) à un espace de cuisson (2) de l'appareil de cuisson (1) en vue de la fourniture d'un premier moyen de traitement (R1) dans l'espace de cuisson,
(d) séjour du premier moyen de traitement (R1) dans l'espace de cuisson (2) pendant une première durée,
(e) affectation d'une deuxième partie de l'eau se trouvant dans la première cuve (3) au réservoir intermédiaire (5),
(f) affectation du premier moyen de traitement (R1) à la première cuve (3),
(g) affectation de l'eau (W) se trouvant dans le réservoir intermédiaire (5) à l'espace de cuisson (2) en vue de la fourniture d'un deuxième moyen de traitement (R2) dans l'espace de cuisson,
(h) séjour du deuxième moyen de traitement (R2) dans l'espace de cuisson (2) pendant une deuxième durée et
(i) affectation du deuxième moyen de traitement (R2) à la première cuve (3).

2. Procédé (a-r) selon la revendication 1, dans lequel le premier moyen de traitement (R1) et le deuxième moyen de traitement (R2) se neutralise mutuellement.

3. Procédé (a-r) selon la revendication 1, dans lequel le deuxième moyen de traitement est constitué d'eau claire.

4. Procédé (a-r) selon la revendication 1, dans lequel le premier moyen de traitement est constitué d'eau claire.

5. Procédé (a-r) selon l'une quelconque des revendications précédentes, comprenant en outre les étapes suivantes :
(j) remplissage côté utilisateur d'une deuxième cuve (4) de l'appareil de cuisson (1) avec de l'eau (W),
(k) affectation d'une première partie de l'eau (W) se trouvant dans la deuxième cuve (4) à un réservoir intermédiaire (5) de l'appareil de cuisson (1),
(l) affectation de l'eau (W) se trouvant dans le réservoir intermédiaire (5) à l'espace de cuisson (2) en vue de la fourniture d'un troisième moyen de traitement (W),
(m) séjour du troisième moyen de traitement (W) dans l'espace de cuisson (2) pendant une troisième durée,
(n) affectation d'une deuxième partie de l'eau (W) se trouvant dans la deuxième cuve (4) au réservoir intermédiaire (5),
(o) affectation du deuxième moyen de traitement (W) à la deuxième cuve (4),
(p) affectation de l'eau (W) se trouvant dans le réservoir intermédiaire (5) à l'espace de cuisson (2) en vue de la fourniture d'un quatrième moyen de traitement (W),
(q) séjour du quatrième moyen de traitement (W) dans l'espace de cuisson (2) pendant une quatrième durée et
(r) affectation du quatrième moyen de traitement (W) à la deuxième cuve (4).

6. Procédé (a-r) selon la revendication 5, dans lequel le quatrième moyen de traitement (W) est constitué d'eau claire.

7. Procédé (a-r) selon la revendication 6, dans lequel le troisième moyen de traitement (W) est constitué d'eau claire.

8. Procédé (a-r) selon l'une quelconque des revendications précédentes, dans lequel au moins un des moyens de traitement (R1, R2, W) se trouvant dans l'espace de cuisson (2) est chauffé.

9. Procédé (a-r) selon l'une quelconque des revendications précédentes, dans lequel l'espace de cuisson (2) est alimenté avec de la vapeur d'au moins un moyen de traitement (R1, R2, W).

10. Procédé (a-r) selon l'une quelconque des revendications précédentes, dans lequel au moins un moyen de traitement (R1, R2, W) est recyclé.

11. Appareil de cuisson (1), en particulier appareil de cuisson ménager, qui est conçu pour la mise en oeuvre d'une séquence de nettoyage, dans lequel l'appareil de cuisson (1) présente un espace de cuisson (2) et une première cuve (3) pouvant être remplie côté utilisateur, **caractérisé en ce que** l'appareil de cuisson (1) est conçu pour la mise en oeuvre du procédé (a-r) selon l'une quelconque des revendications précédentes.

12. Appareil de cuisson selon la revendication 11, **caractérisé en ce que** l'appareil de cuisson (1) est conçu pour la mise en oeuvre du procédé (a-r) selon l'une quelconque des revendications 5 à 10 et présente pour cela une deuxième cuve (4) pouvant être remplie côté utilisateur.
